# EUROPEAN PATENT APPLICATION

(11) **EP 4 523 879 A2**
(43) Date of publication of application: **19.03.2025**
(21) Application number: 24222706.4
(22) Date of filing: 23.12.2024
(51) Int. Cl.: B29C 35/02, B29C 59/02, B44C 1/24, E04F 15/10, B29L 7/00, B29L 31/10

(54) **EMBOSSING METHOD FOR FLOOR TILE AND THERMOPLASTIC FLOOR TILE**

(30) Priority: 14.05.2024 CN 202410599334
(71) Applicant: Shanghai Jinka Flooring Technology Co., Ltd., Shanghai 201806 (CN)
(72) Inventor: YU, Hsiung-Tieh, Shanghai 201806 (CN); CHANG, Stephen, Shanghai 201806 (CN); DOU, Renmei, Shanghai 201806 (CN); LI, Wanpeng, Shanghai 201806 (CN); WU, Fangqun, Shanghai 201806 (CN); CHEN, Si, Shanghai 201806 (CN); XU, Shuangyang, Shanghai 201806 (CN)
(74) Representative: Zaboliene, Reda

(57) **Abstract**

An ultrasonic embossing method for floor tiles makes thermoplastic polymer material in a floor tile (1) to be embossed be converted into a viscous flow state by an ultrasonic embossing device (2), and embosses a floor tile modeling and a floor tile pattern on the floor tile (1) to be embossed at the same time, such that the floor tile modeling and the floor tile pattern are not prone to rebound after being formed by embossing. Additionally, the ultrasonic embossing device (2) can further configure an ultrasonic welding head (21) as a first welding head or a second welding head according to the floor tile modeling and the floor tile pattern, thereby meeting many types of different requirements for embossing patterns and reducing development cost of production lines.

## Description

### TECHNICAL FIELD

The present invention relates to the technical field of embossing floor tiles, and in particular, to an embossing method for floor tiles and a thermoplastic floor tile.

### BACKGROUND

Thermoplastic floor tiles refer to floor tiles made from thermoplastic polymer materials with added fillers, additives, etc. Thermoplastic polymer materials include PVC, PP, PE, PET, PETG, TPU, TPE, and so on. When producing thermoplastic floor tiles, it is usually necessary to treat four sides of each floor tile. For example, a part of an edge of a floor tile is cut off, so as to make inclined chamfers, rounded corners, irregular chamfers and other shapes on the edge of the floor tile, thereby bringing a beautiful appearance or corresponding functions to the floor tile.

At present, when treating edges of thermoplastic floor tiles, scrapers, molds, engraving machines, and the like are usually used to perform cold pressing and cutting during forming processes of floor tiles. However, thermoplastic floor tiles produced in this way are mostly in a glassy or highly elastic state during cutting and forming. When edges of the floor tiles are subjected to force, formed internal attraction is very strong, resulting in that the edges of the floor tiles are prone to rebound or even recover after external force processing the edges of the floor tiles disappears, or that the case of damaging features and patterns of the floor tiles appears, which are especially obvious in high temperatures. This will greatly reduce the yield rate of thermoplastic floor tiles.

### SUMMARY OF THE DISCLOSURE

The present invention provides an embossing method for floor tiles, which solves the problem of rebounding of edges of thermoplastic floor tiles using ultrasonic embossing technology.

An embossing method for floor tiles in the present invention comprises using an ultrasonic embossing device to emboss a floor tile to be embossed, and specifically comprises the following steps: performing ultrasonic welding for a first treatment surface of the floor tile to be embossed to make the first treatment surface become a viscous flow state; and embossing a floor tile modeling and a floor tile pattern on the first treatment surface in the viscous flow state.

Furthermore, the embossing method for floor tiles further comprises preparing the ultrasonic embossing device, which specifically comprises the following steps: setting an embossing part on an ultrasonic welding head of the ultrasonic embossing device according to a floor tile modeling and a floor tile pattern; and setting a placing angle of the ultrasonic welding head according to the floor tile modeling and the floor tile pattern.

Furthermore, the embossing part is set at an end of the ultrasonic welding head facing the floor tile to be embossed, and the embossing part is provided thereon with an embossing pattern obtained by engraving according to the floor tile pattern.

Furthermore, the ultrasonic welding head comprises a first welding head configured to emboss a discontinuous pattern on the first treatment surface, the first welding head is in a cuboid shape, the embossing part is provided on the first welding head.

Furthermore, the ultrasonic welding head comprises a second welding head configured to emboss a continuous pattern on the first treatment surface, the first welding head is in a circular truncated cone shape, the embossing part is provided on the second welding head.

Furthermore, the floor tile to be embossed comprises a wear resistant layer, a decorative layer, and a substrate layer which are provided layer by layer, the wear resistant layer is provided above the decorative layer in a Z direction, the decorative layer is provided above the substrate layer in a Z direction, the wear resistant layer is configured to make the decorative layer be visible, and the decorative layer is configured to print a decorative pattern.

Furthermore, effective ingredients of the wear resistant layer, of the decorative layer, and of the substrate layer all comprise thermoplastic polymer material.

Furthermore, the first treatment surface is positioned at a circumferential periphery of the floor tile to be embossed, and a depth of the first treatment surface in a Z direction is greater than that of the wear resistant layer and of the decorative layer.

Furthermore, the ultrasonic embossing device is configured to make tops of the wear resistant layer, of the decorative layer, and of the substrate layer at the first treatment surface become the viscous flow state.

Furthermore, the present invention further comprises a thermoplastic floor tile, which is made by the aforementioned embossing method for floor tiles.

In the ultrasonic embossing method for floor tiles provided by the present invention, thermoplastic polymer material in a floor tile to be embossed is converted into a viscous flow state by an ultrasonic embossing device, and a floor tile modeling and a floor tile pattern are embossed on the floor tile to be embossed at the same time, such that the floor tile modeling and the floor tile pattern are not prone to rebound after being formed by embossing, stability of embossing of the edge of the floor tile is greatly improved, and yield rate of the floor tile increases. Additionally, the ultrasonic embossing device in the present invention can further configure an ultrasonic welding head to be a first welding head or a second welding head according to the floor tile modeling and the floor tile pattern, so as to meet many types of different requirements for embossing patterns and reduce development cost of production lines.

### BRIEF DESCRIPTION OF THE DRAWINGS

FIG. 1 is a schematic diagram of an embossing method for floor tiles provided by the present invention.
FIG. 2 is a schematic view of a first welding head in the present invention.
FIG. 3 is a schematic view of a second welding head in the present invention.
FIG. 4 is a schematic view of a floor tile to be embossed with an irregular chamfer in the present invention.
FIG. 5 is a schematic view of a floor tile to be embossed with a rounded corner in the present invention.

### DETAILED DESCRIPTION

In order to further explain technical solutions adopted by the invention for achieving preset invention purposes and effect thereof, the present invention is described in detail below in conjunction with accompany drawings and preferred embodiments as follows.

It should be noted that the terms "first", "second", "third", "fourth", and the like in the specification and the claims of the present invention are used to distinguish similar objects and are not necessary to be used to describe specific orders or sequences.

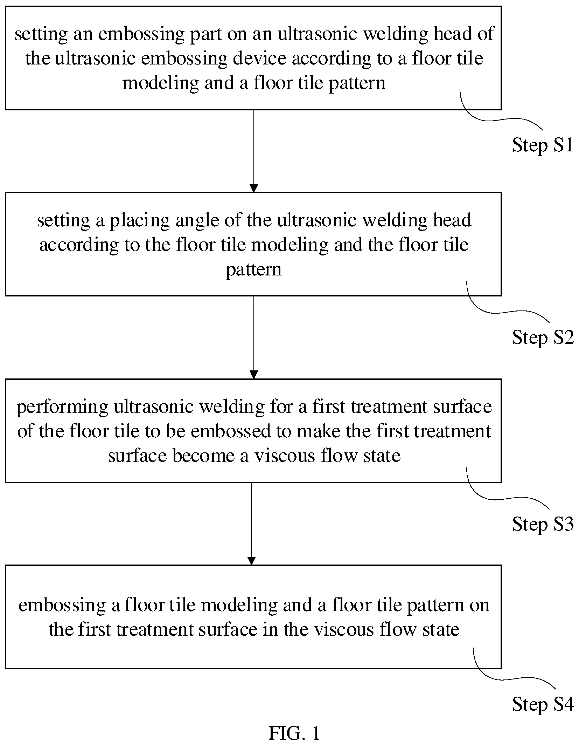

Referring to FIG. 1, the present invention provides an embossing method for floor tiles based on ultrasonic welding technology, which is an ultrasonic embossing method being suitable for fabricating floor tiles, especially thermoplastic floor tiles, additionally, it can also be used to fabricate floor tiles, wall tiles, ceilings, and so on containing thermoplastic polymer material. The ultrasonic embossing method for floor tiles of the present invention includes preparing an ultrasonic embossing device 2 and using the ultrasonic embossing device 2 to emboss a floor tile 1 to be embossed, and specifically includes the following steps.

Preparing the ultrasonic embossing device 2 specifically includes:
Step S1: setting an embossing part on an ultrasonic welding head 21 of the ultrasonic embossing device 2 according to a floor tile modeling and a floor tile pattern.

Specifically, the floor tile modeling refers to a shape that is preset and needs to be made at an edge of the floor tile 1 to be embossed, including one or more of an inclined chamfer, a rounded corner, and an irregular chamfer embossed by performing ultrasonic embossing at the edge of the floor tile 1 to be embossed; the floor tile pattern refers to a pattern design that is preset and and needs to be made at an edge of the floor tile 1 to be embossed, including a continuous pattern or a discontinuous pattern embossed by performing ultrasonic embossing at the edge of the floor tile 1 to be embossed, the discontinuous pattern cam be a single mark, character, and so on, and the continuous pattern can be lines, designs, and so on in large sizes. In the present invention, the ultrasonic embossing device 2 includes at least an ultrasonic generator 22 and an ultrasonic welding head 21; the ultrasonic generator 22 is used to generate high-frequency mechanical waves; the ultrasonic welding head 21 is used to convert the high-frequency mechanical waves into mechanical energy, and by contact with the floor tile 1 to be embossed, make a temperature of a designated area on a surface of the floor tile 1 to be embossed rapidly increase, thereby making a floor tile modeling and a floor tile pattern in the designated area on the surface of the floor tile 1 to be embossed. In this embodiment, the ultrasonic welding head 21 is provided thereon with an embossing part, the embossing part is provided at an end of the ultrasonic welding head 21 facing the floor tile 1 to be embossed, and the embossing part is provided thereon with an embossing pattern obtained by engraving according to a floor tile pattern. When performing ultrasonic embossing, the embossing part is used to contact the floor tile 1 to be embossed to emboss a pattern on the floor tile 1 to be embossed.

Step S2: setting a placing angle of the ultrasonic welding head 21 according to the floor tile modeling and the floor tile pattern.

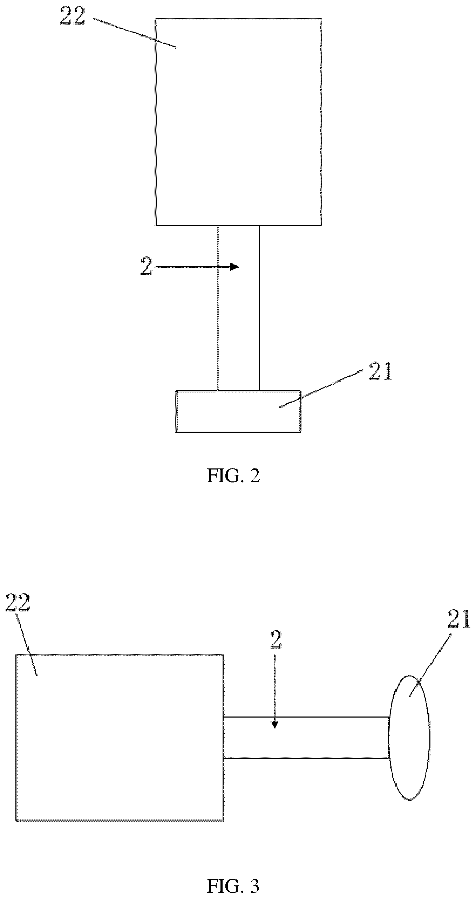

Specifically, with respect to the floor tile modeling, making an inclined chamfer, a rounded corner, or an irregular chamfer at an edge of the floor tile 1 to be embossed can be realized by changing a placing angle of the ultrasonic welding head 21. For example, according to a preset 60° inclined chamfer, the ultrasonic welding head 21, particularly the embossing part of the ultrasonic welding head 21, is set at a place having a 30° included angle with the floor tile 1 to be embossed, the embossing part is in contact with the floor tile 1 to be embossed by the placed angle and make a floor tile modeling thereof. With respect to the floor tile pattern, it can be realized by engraving corresponding embossing pattern on the embossing part and make the embossing part contact and emboss the floor tile 1 to be embossed. In particular, in the technical field related to ultrasonic welding, the ultrasonic generator 22 and the welding head thereof are usually configured in two different forms according to the different components to be welded. One is the configuration form of longitudinal wave emission, that is, the ultrasonic generator 22 is set above the ultrasonic welding head 21, and the two are arranged longitudinally along the direction of gravity or approximately the direction of gravity, an end of the ultrasonic welding head 21 in contact with components to be welded is correspondingly configured as a plane. The other is the configuration form of transverse wave emission, that is, the ultrasonic generator 22 is placed on the left or right side of the ultrasonic welding head 21, and the two are arranged in a transverse or approximately transverse direction. An end of the ultrasonic welding head 21 in contact with components to be welded is correspondingly configured as a spherical surface. Please also refer to FIG. 2 and FIG. 3, correspondingly, in a preferred embodiment of the present invention, the ultrasonic generator 22 and the ultrasonic welding head 21 can also be configured in either the longitudinal wave emission or the transverse wave emission, and the ultrasonic welding head 21 is correspondingly configured as a plane or a spherical surface. When the ultrasonic generator 22 and the ultrasonic welding head 21 in the present invention are configured to emit waves longitudinally, the ultrasonic welding head 21 includes a first welding head used to emboss a discontinuous pattern, the first welding head is in a cuboid shape, and the embossing part on the first welding head is a plane correspondingly; when the ultrasonic generator 22 and the ultrasonic welding head 21 in the present invention are configured to emit waves traversely, the ultrasonic welding head 21 includes a second welding head used to emboss a continuous pattern, the second welding head is in a rounded shape, and the embossing part on the second welding head is a sphere correspondingly. It can be easily understood that a square or planar ultrasonic welding head 21 is easy to make a discontinuous pattern, and rounded, wheel-shaped, or spherical ultrasonic welding head 21 is easy to make a continuous pattern. The ultrasonic embossing device 2 of the present invention can configure the ultrasonic welding head 21 as the first welding head or the second welding head according to floor tile modelings and floor tile patterns to meet many kinds of different requirements for embossing patterns, and greatly reduces development cost of production lines.

Using the ultrasonic embossing device 2 to emboss a floor tile 1 to be embossed specifically includes:
Step S3: performing ultrasonic welding for a first treatment surface 1a of the floor tile 1 to be embossed to make the first treatment surface 1a become a viscous flow state.

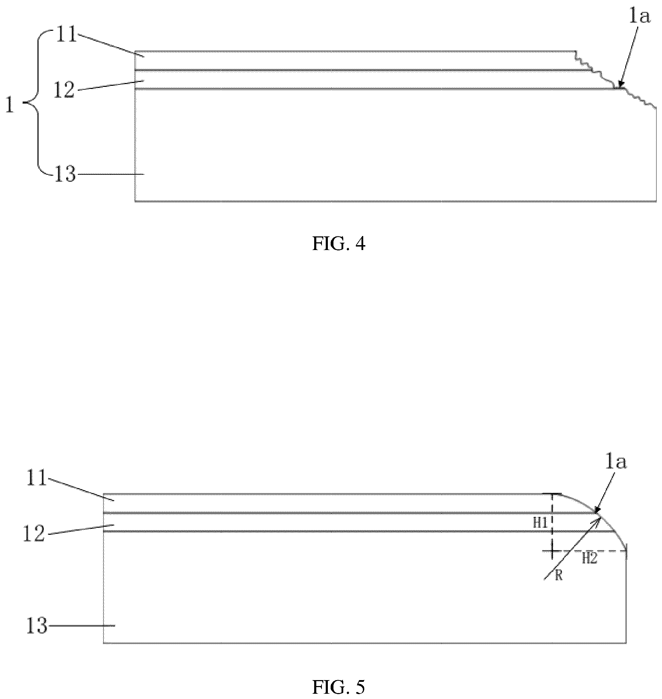

Specifically, the floor tile 1 to be embossed includes a wear resistant layer 11, a decorative layer 12, and a substrate layer 13 which are provided layer by layer, the wear resistant layer 11 is provided above the decorative layer 12 in a Z direction, the decorative layer 12 is provided above the substrate layer 13 in a Z direction. The wear resistant layer 11 is a transparent film or thin piece, which is used to make the decorative layer 12 be visible; the decorative layer is a white background film, which is used to print a decorative pattern; the substrate layer 13 is a thin piece formed by rolling or extrusion using floor tile substrate with plasticizer, filler, and additive, and is also a base layer of the floor tile 1 to be embossed. In this embodiment, the floor tile 1 to be embossed is a thermoplastic floor tile, effective ingredients of each of the wear resistant layer 11, the decorative layer 12, and the substrate layer 13 include thermoplastic polymer material, such as PVC, PP, PE, PET, PETG, TPU, TPE, etc. The ultrasonic embossing device 2, by ultrasonic welding, can make a designated area of the floor tile 1 to be embossed, that is, the first treatment surface 1a, generate an extremely high surface temperature in a very short period of time, so that the thermoplastic polymer material in the floor tile 1 to be embossed becomes a viscous flow state. In the viscous flow state, internal stress of the first treatment surface 1a of the floor tile 1 to be embossed is very small, even through mechanical energy coming from the ultrasonic welding head 21 is removed, the first treatment surface 1a of the floor tile 1 to be embossed is not prone to rebound, thus the floor tile modeling and the floor tile pattern can be fixed, and stability of the floor tile is greatly enhanced. Please also referring to FIG. 4 and FIG. 5, in this embodiment, the first treatment surface 1a is positioned at a circumferential periphery of the floor tile 1 to be embossed, and a depth of the first treatment surface 1a in a Z direction is greater than that of the wear resistant layer 11 and of the decorative layer 12. The ultrasonic embossing device 2 is used to make tops of the wear resistant layer 11, of the decorative layer 12, and of the substrate layer 13 at the first treatment surface 1a become the viscous flow state, in other words, that the ultrasonic embossing device 2 makes the first treatment surface 1a become the viscous flow state means making the wear resistant layer 11 and the decorative layer 12 at the edge of the floor tile 1 to be embossed and a part of the substrate layer 13 at the top become the viscous flow state.

Step S4: embossing a floor tile modeling and a floor tile pattern on the first treatment surface 1a in the viscous flow state.

Specifically, before embossing the floor tile modeling and the floor tile pattern, the ultrasonic welding head 21 and the embossing part thereon are set at positions and angles that can emboss the floor tile modeling and the floor tile pattern.. When the floor tile 1 to be embossed reaches a designated position in a production line, the embossing part contacts the first treatment surface 1a to make the first treatment surface 1a become the viscous flow state, and embosses the floor tile pattern at the same time of embossing the floor tile modeling for the first treatment surface 1a, that is, the floor tile modeling and the floor tile pattern on the first treatment surface 1a are generated simultaneously under work of the ultrasonic embossing device 2. Making the floor tile modeling is realized by the shape and the placing angle of the embossing part, and making the floor tile pattern is realized by the embossing pattern on the embossing part. If the floor tile modeling requires embossing an irregular chamfer on the first treatment surface 1a, the first treatment surface 1a can further offset, to some extent, expansion force generated when the floor tile is heated. When the floor tile is heated and expands, the irregular gap in the irregular chamfer can absorb expansion stress, reduce the phenomenon of expansion and arching of the heated floor tile, and effectively improves performance of the floor tile in a high-temperature use environment.

In a preferred embodiment of the present invention, the floor tile modeling is a rounded corner, of which an arc radius R is 10mm, an arc depth H is 2mm, and an arc width H2 is 4mm, the floor tile pattern is wavy continuous pattern; thus the ultrasonic welding head 21 is configured to be the second welding head with a sphere, the embossing pattern on the embossing part is engraved to be wavy, and the embossing part is set at a place having a 60° included angle with the floor tile 1 to be embossed. When performing ultrasonic embossing, the floor tile 1 to be embossed is moved on a production line to an area corresponding to the ultrasonic embossing device 2, the ultrasonic welding head 21 and the embossing part thereon contact the first treatment surface 1a at the edge of the floor tile 1 to be embossed, a temperature of the first treatment surface 1a rises quickly, the first treatment surface 1a becomes the viscous flow state; at this time, the embossing part make the first treatment surface 1a become a rounded corner, and the embossing pattern on the embossing part embosses a continuous wave pattern on the first treatment surface 1a at the same time.

Furthermore, the present invention further includes a thermoplastic floor tile, which is made by the aforementioned ultrasonic embossing method for floor tiles.

Furthermore, the present invention further includes two methods for detecting stability of embossed patterns of thermoplastic floor tiles, which are especially applicable for the thermoplastic floor tile made by the ultrasonic embossing method for floor tiles of the present invention. They specifically include:
Room temperature detecting method:
   sampling a floor tile which has just been made, immediately detecting and marking a depth of its pattern in a room temperature;
   every 1 hour, detecting and marking the depth of the pattern in the room temperature, repeating 4 times;
   every 24 hour, detecting and marking the depth of the pattern in the room temperature, repeating 30 times;
   comparing and calculating marked data, if a rebounding rate is less than or equal to 20%, determining that the stability of the floor tile is qualified.
High temperature detection method:
   sampling a floor tile which has just been made, immediately detecting and marking a depth of its pattern in a room temperature;
   every 1 hour, detecting and marking the depth of the pattern in a 70°C constant temperature oven, repeating 6 times;
   every 24 hour, detecting and marking the depth of the pattern in the 70°C constant temperature oven, repeating 30 times;
   comparing and calculating marked data, if a rebounding rate is less than or equal to 20%, determining that the stability of the floor tile is qualified.

In conclusion, the ultrasonic embossing method for floor tiles of the present invention makes thermoplastic polymer material in a floor tile to be embossed be converted into a viscous flow state by an ultrasonic embossing device, and a floor tile modeling and a floor tile pattern are embossed on the floor tile to be embossed at the same time, such that the floor tile modeling and the floor tile pattern are not prone to rebound after being formed by embossing, stability of embossing of the edge of the floor tile is greatly improved, and yield rate of the floor tile increases. Additionally, the ultrasonic embossing device in the present invention can further configure an ultrasonic welding head to be a first welding head or a second welding head according to the floor tile modeling and the floor tile pattern, so as to meet many types of different requirements for embossing patterns and reduce development cost of production lines.

The above described are only specific embodiments of the present invention, however, the protection scope of the present invention is not limited here. Any change or replacement that can be easily considered by technicians familiar with this technical field within the technical range disclosed by the present invention should be covered within the protection scope of the present invention. Therefore, the protection scope of the present invention should be based on the protection scope of the claims.

## Claims

1. An embossing method for floor tiles comprising:
by an ultrasonic embossing device (2), performing ultrasonic welding for a first treatment surface (1a) of a floor tile (1) to be embossed to make the first treatment surface (1a) become a viscous flow state; and
embossing a floor tile modeling and a floor tile pattern on the first treatment surface (1a) in the viscous flow state.

2. The embossing method for floor tiles according to claim 1,before the by an ultrasonic embossing device, performing ultrasonic welding for a first treatment surface of a floor tile to be embossed to make the first treatment surface become a viscous flow state, further comprising:
setting an embossing part on an ultrasonic welding head (21) of the ultrasonic embossing device (2) according to a floor tile modeling and a floor tile pattern; and
setting a placing angle of the ultrasonic welding head (21) according to the floor tile modeling and the floor tile pattern.

3. The embossing method for floor tiles according to claim 2, wherein the setting an embossing part on an ultrasonic welding head of the ultrasonic embossing device according to a floor tile modeling and a floor tile pattern comprises:
setting the embossing part at an end of the ultrasonic welding head (21) facing the floor tile (1) to be embossed, and
forming an embossing pattern obtained by engraving according to the floor tile pattern on the embossing part.

4. The ultrasonic embossing method for floor tiles according to claim 2 or 3, wherein the setting an embossing part on an ultrasonic welding head of the ultrasonic embossing device according to a floor tile modeling and a floor tile pattern comprises:
providing a first welding head serving as the ultrasonic welding head (21), wherein the first welding head is in a cuboid shape and configured to emboss a discontinuous pattern on the first treatment surface (1a);
forming the embossing part on the first welding head.

5. The ultrasonic embossing method for floor tiles according to any one of claims 2-4, wherein the setting an embossing part on an ultrasonic welding head of the ultrasonic embossing device according to a floor tile modeling and a floor tile pattern comprises:
providing a second welding head serving as the ultrasonic welding head (21) , wherein the second welding head is in a circular truncated cone shape and configured to emboss a continuous pattern on the first treatment surface (1a);
forming the embossing part on the second welding head.

6. A thermoplastic floor tile made by the embossing method for floor tiles according to any one of claims 1-5.

7. The thermoplastic floor tile according to claim 6, wherein the thermoplastic floor tile comprises a wear resistant layer (11), a decorative layer (12), and a substrate layer (13) which are provided layer by layer, the wear resistant layer (11) is configured to make the decorative layer (12) be visible, and the decorative layer (12) is configured to print a decorative pattern.

8. The thermoplastic floor tile according to claim 6 or 7, wherein each of the wear resistant layer (11), the decorative layer (12), and the substrate layer (13) comprises thermoplastic polymer material.

9. The thermoplastic floor tile according to any on of claims 6-8, wherein the first treatment surface (1a) is positioned at a circumferential periphery of the thermoplastic floor tile, and a depth of the first treatment surface (1a) is greater than that of the wear resistant layer (11) and of the decorative layer (12).

10. The thermoplastic floor tile according to any one of claims 6-9, wherein tops of the wear resistant layer (11), of the decorative layer (12), and of the substrate layer (13) at the first treatment surface (1a) are configured to become the viscous flow state for embossing the floor tile modeling and the floor tile pattern under ultrasonic welding using the ultrasonic embossing device (2).
